# EUROPÄISCHE PATENTSCHRIFT

(11) **EP 1 799 413 B1**
(45) Veröffentlichungstag und Bekanntmachung des Hinweises auf die Patenterteilung: **28.11.2012**
(21) Anmeldenummer: 05787269.9
(22) Anmeldetag: 16.09.2005
(51) Int. Cl.: B29B 9/06, B26D 7/26

(54) **MESSERROTOR ZUM GRANULIEREN VON KUNSTSTOFFSTRÄNGEN**
CUTTING ROTOR FOR GRANULATING PLASTIC CASTINGS
ROTOR A LAMES POUR GRANULER DES BARRES EXTRUDEES EN MATIERE PLASTIQUE

(30) Priorität: 13.10.2004 DE 102004049862
(43) Veröffentlichungstag der Anmeldung: 27.06.2007
(73) Patentinhaber: Automatik Plastics Machinery GmbH, 63762 Grossostheim (DE)
(72) Erfinder: DAHLHEIMER, Stefan, 63801 Kleinostheim (DE)
(74) Vertreter: Bardehle, Heinz
(86) Internationale Anmeldenummer: PCT/EP2005/010023
(87) Internationale Veröffentlichungsnummer: WO 2006/042602

(56) Entgegenhaltungen:
- WO-A-03/011547
- DE-A1- 2 909 862
- US-A- 5 611 983

## Beschreibung

Die Erfindung bezieht sich auf einen Messerrotor zum Granulieren von Kunststoffstränge (gemäß dem Anspruch 1), der mit axial von einer Stirnseite wegragenden Messern versehen ist, die einzeln an Tragflächen des Messerrotors mittels Befestigungselementen angebracht sind.

Ein derartiger Messerrotor ist in der US-PS 3,196,487 beschrieben und dargestellt. Dieser Messerrotor wird in einem Unterwassergranulator verwendet, der eine Düsenplatte mit entlang eines Kreises angeordneten D+sen aufweist, die von den weit flügelartige wegstehenden Messern des Messerrotors in kreisförmige Bewegung überstrichen werden, Der Messerrotor dreht sich dabei um eine Achse, die durch den Mittelpunkt des Kreises verläuft, entlang dessen die Düsen in der Düsenplatte angeordnete sind. Mit der Bewegung der Messer über die Düsen schneiden diese aus den Düsen schmelzflüssig austretende Kunststoffstränge in einzelne Stücke, die das gewünschte Granulat bilden. Dieser Vorgang des Abschneidens spielt sich unter Wasser ab, das während der Drehung des Messerrotors über die Düsenplatte strömt. Die flügelartig wegstehenden Messer neigen wegen ihrer erheblichen Länge zu einem gewissen Flattern, das das satte Anliegen der Messer an der Düsenplatte beeinträchtigt. Für einen gleichmäßigen Schnitt der Kunststoffstränge ist das ständige satte Anliegen der Messer an der Düsenplatte aber Voraussetzung.

Bei einem weiteren bekannten Unterwassergranulator gemäß der DE-PS 100 62113 werden die von dem Messerrotor getragenen Messer einzeln an dem Messerrotor angebrachte Tragflächen angeschraubt und bieten dabei eine mehr kompakte flatterfreie Gestaltung. Die Tragflächen verlaufen in Richtung zur Düsenplatte im Messerrotor, wozu der Messerrotor mit in gleicher Richtung verlaufenden Tragflächen versehen ist. An diese Tragflächen werden die einzelnen Messer mittels als Befestigungselemente dienende Schrauben angepresst, die die Messer durchdringen und mit ihrem Kopf für ein Werkzeug leicht erfassbar von den Messern abstehen. Zwischen den einzelnen Messern und den die Tragflächen bildenden einzelnen Trägem am Messerrotor sind Zwischenräume vorgesehen, durch die Wasser und Granulat in axialer Richtung wegströmen kann. Es hat sich dabei herausgestellt, dass die von den einzelnen Messern abstehenden Schraubenköpfe einerseits wegen des jeweils gegenüberliegenden Trägers nicht leicht zugänglich sind und darüber hinaus den an ihnen vorbeifließenden Strom von Wasser und Granulat behindern.

In der US-A-5,611,983 ist ein Messerrotor zum Granulieren von Kunststoffsträngen dargestellt (gemäß dem Oberbegriff des Anspruchs 1), der mit axial von seiner Stirnseite wegragenden Messern versehen ist, die einzeln über abgeknickte Arme an der der Düsenplatte zugewandten Frontfläche des Messerrotors mit Schrauben befestigt sind. Für die Aufnahme dieser Arme sind in der der Düsenplatte zugewandten Oberfläche des Messerrotors entsprechende Vertiefungen angebracht. Die schlagartige Belastung der Messer beim Granulieren wird dabei also im wesentlichen von den Schrauben aufgefangen, die natürlich der Gefahr ausgesetzt sind, dass sie sich während des Betriebes lockern und damit den Schneidvorgang beeinträchtigen bzw. verhindern.

Der Erfindung liegt die Aufgabe zugrunde, die Befestigung der Messer an einem derartigen Messerrotor dahingehend zu verbessern, dass einerseits die bei der stoßartigen Belastung der Messer beim Granulieren auftretenden Kräfte von dem Messerrotor sicher aufgefangen werden und eine gute Zugänglichkeit der die Messer haltenden Befestigungselemente besteht, wobei die Strömung des Wassers und des Granulats nicht behindert werden darf.

Erfindungsgemäß geschieht dies dadurch dass der Messerrotor mit in seine Umfangsfläche mündenden Radialnuten versehen ist, in die die Messer mit hakenartig abgeknickten Vorsprüngen so eingesetzt sind, dass ihre Messerschneiden radial zur Achse des Messerrotors verlaufen, und dass die Tragflächen von Seitenwänden der Radialnuten und von die Radialnuten begrenzenden Radialquerwänden gebildet sind, wobei die eine Radialquerwand ein Widerlager für das Befestigungselement und die andere Radialquerwand eine Anlage für den Vorsprung bildet.

Auf Grund dieser hakenartigen Befestigung der einzelnen Messer und dem Einsetzen der Befestigungselemente durch eine Radialquerwand sind diese von einer Stirnseite des Messerrotors her gesehen direkt und leicht zugänglich. Sie sind dabei von den Zwischenräumen zwischen Messern und Trägem entfernt angeordnet und können daher die in diesen Zwischenräumen verlaufende Strömung nicht behindern. Darüber hinaus bietet die hakenartige Gestaltung der Messer eine hohe Sicherheit hinsichtlich ihrer Lage in Bezug auf den Messerrotor, so dass insgesamt der erfindungsgemäß ausgestattete Messerrotor eine für den Betrieb besonders stabile, flatterfreie Gestaltung aufweist.

Zwecks sicherer Halterung des Messers kann man die der Messerschneide zugewandte Seite des Vorsprungs derart schräg zur Radialrichtung gestalten, dass das auf den Vorsprung drückende, als Schraube ausgebildete Befestigungselement mit einer den Vorsprung in den Messerrotor hineinziehenden Kraftkomponente beaufschlagt. Es ist jedoch auch möglich, den Vorsprung mit einer Einkerbung zu versehen, in die eine entsprechend geformte Stirnseite des als Schraube ausgebildeten Befestigungselementes drückt. Als Befestigungselemente werden vorzugsweise Schrauben verwendet. In diesem Falle sieht man für den Schraubenkopf zweckmäßig jeweils eine Ausnehmung in dem Messerrotor vor, in den der Schraubenkopf versenkt ist. Dieser ist in üblicher Weise mit einer Drehaufnahme versehen. Die Aufnahme des Schraubenkopfes in eine Ausnehmung in den Messerrotor hat vor allem den Vorteil, dass die Schraubenköpfe irgendwelche Reinigungsvorgänge nicht behindern können. Vorzugsweise werden die Schrauben so angeordnet, dass sie von der der Messerschneide zugewandten Seite her in den Messerrotor eindringen. Diese Seite ist für Reparaturarbeiten besonders gut zugänglich. Es ist aber auch möglich, die Schrauben in umgekehrter Richtung vorzusehen, also derart, dass sie von der der Messerschneide abgewandten Seite her in den Messerrotor eindringen.

In den Figuren sind Ausführungsbeispiele dargestellt.

Es zeigen:
- Figur 1: den Messerrotor mit Blick auf seine Stirnseite mit Schrauben als Befestigungselemente;
- Figur 2: den gleichen Messerrotor mit Blick auf die rückwärtige Seite der Messer;

- Figur 3: einen Teil des Messerrotors mit teilweise unbestückten Radialnuten.
- Figur 4: einen Schnitt durch den Messerrotor im Bereich eines eingesetzten Messers;
- Figur 5: eine Abwandlung der Gestaltung des Messerrotors gemäß Figur 4, und zwar mit eingekerbtem Vorsprung;
- Figur 6: eine weitere Abwandlung mit Doppelmesser;
- Figur 7: eine weitere Abwandlung mit einer Schraube von rückwärtiger Seite;
- Figur 8 und 9: eine weitere Abwandlung mit einem Keil als Befestigungselement.

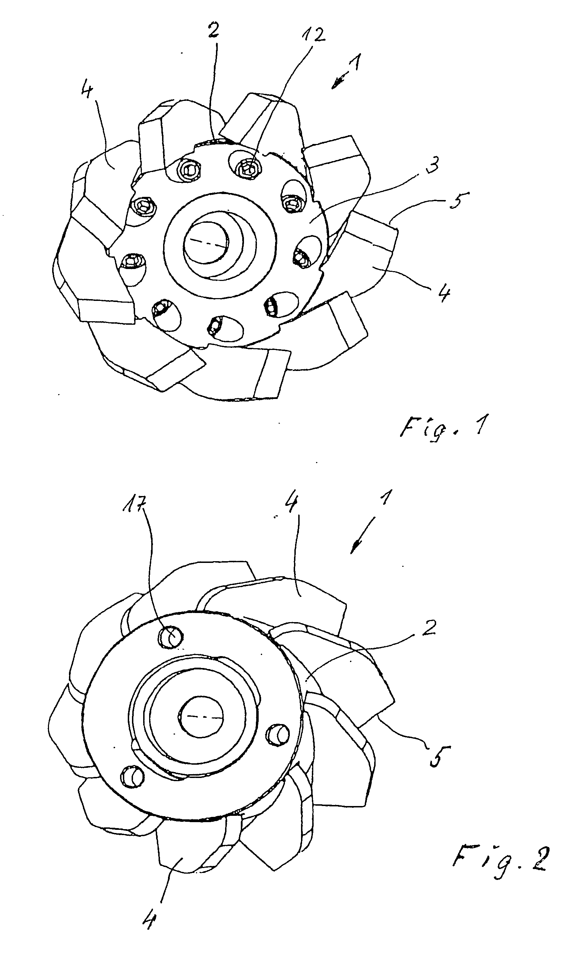

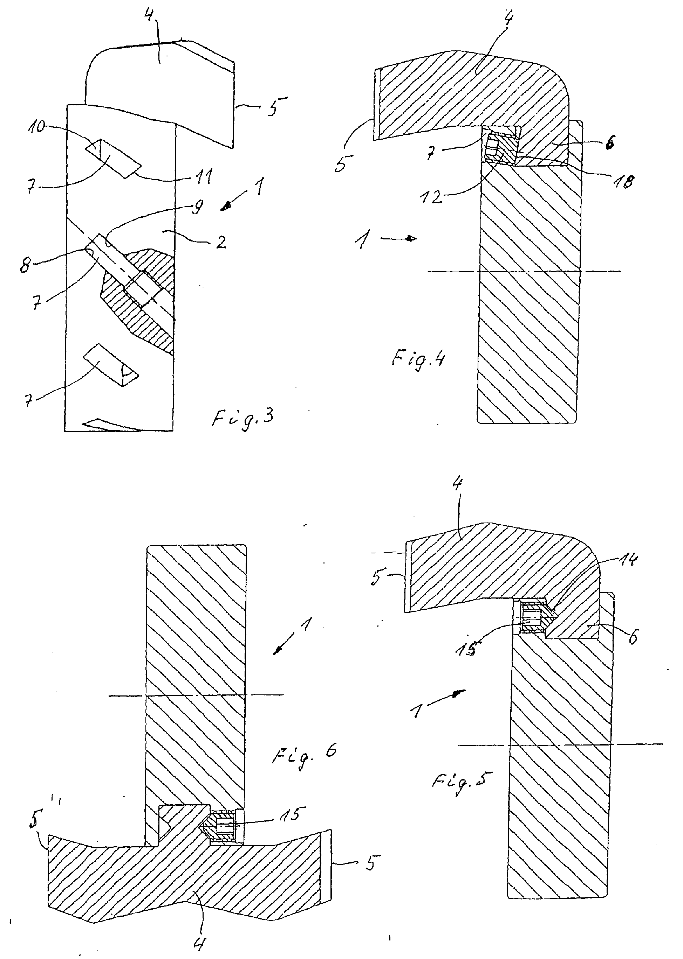

Der in der Figur 1 dargestellte Messerrotor 1 trägt an seiner Umfangsfläche 2 die einzelnen Messer 4, deren Schnittkanten 5 radial zur Achse des Messerrotors 1 verlaufen und damit an eine nicht dargestellte Düsenplatte, wie dies z.B. die US-PS 3,196,487 zeigt, anliegen und bei Drehung des Messerrotors 1 mit den Messern 4 dann in der oben beschriebenen Weise Kunststoffstränge zu Granulat zerschneiden. Die Messer 4 sind auswechselbar mittels der als Schrauben 12 ausgebildeten Befestigungselemente (siehe z.B. Figur 4) an dem Messerotor 1 befestigt. Wie die Figur 1 deutlich zeigt, sind die Schrauben 12 von der Stirnseite 3 des Messerrotors 1 leicht zugänglich, wo sie eine Strömung in den Zwischenräumen zwischen den einzelnen Messern 4 nicht behindern können.

Figur 2 zeigt den gleichen Messerrotor 1 mit den Messern 4, die aus dem Umfangsfläche 2 des Messerrotors 1 heraus ragen. Die Befestigung der Messer 4 an dem Messerrotor 1 ist in den Figuren 4 bis 7 dargestellt.

Die in der Figur 2 dargestellte Rückseite des Messerrotors 1 weist drei Aufnahmelöcher 17 auf, die dazu dienen, den Messerrotor 1 an einer nicht dargestellten Drehachse zu befestigen.

In der Figur 3 ist eine Ansicht des Messerrotors mit Blickrichtung senkrecht auf seine Achse dargestellt, die die Gestaltung der Radialnuten teilweise ohne Messer zeigt. Wie ersichtlich, besitzt der Messerrotor 1 im Bereich seiner Umfangsfläche 2 mehrere Radialnuten, von denen die Radialnuten 7 zwecks besserer Darstellung der Gestaltung des Messerrotors 1 freigelassen sind. Nur eine nicht sichtbare Radialnut ist mit dem Messer 4 bestückt. Die Radialnuten 7 werden seitlich von den Seitenwänden 8 und 9 begrenzt, außerdem von den Radialquerwänden 10 und 11. Damit besitzen die Radialnuten 7 eine Länge, die bis auf einen verbliebenen Spalt der Länge der Vorsprünge 6 (siehe Figur 4) entspricht.

Figur 4 zeigt als Schnitt längs der Mitte der Messer 4 aus Figur 1 und 2 die Befestigung der einzelnen Messer 4, die mit dem hakenartig wegragenden Vorsprung 6 versehen sind, der in eine Radialnut 7 im Messerrotor 1 hinein ragt (siehe Figur 3). Die Radialnut 7 weist eine Breite auf, die mit geringer Toleranz der Dicke der Messer 4 entspricht, so dass ein eingesetztes Messer 4 seitlich an den Seitenwänden 8 und 9 der Radialnut 7 sicher abgestützt sind. Zum Festhalten des Messers 4 dient die Schraube 12, die mit einem entsprechenden Durchbruch im Messerrotor 1 eingedreht ist und auf das Widerlager 18 an dem Vorsprung 6 drückt und damit das Messer 4 an den Messerrotor 1 sicher festhält. Die der Messerschneide 5 zugewandte Seite des Vorsprungs 6 verläuft, wie die Figur 4 deutlich zeigt, derart schräg zur Radialrichtung, dass die auf den Vorsprung 6 drückende Schraube diesen mit in den Messerrotor 1 hineinziehender Kraftkomponente beaufschlagt und damit das sichere Festhalten des Vorsprungs 6 gewährleistet.

In der Figur 5 ist eine Abwandlung der Gestaltung gemäß Figur 4 dargestellt, bei der es sich darum handelt, mittels einer als Widerlager dienenden Einkerbung 14 in dem Vorsprung 6 das Messer 4 an den Messerrotor 1 festhält. Hierzu ist die Schraube 15 mit einem entsprechenden Kegel an seiner Stirnseite versehen, der in die Einkerbung 14 passt und bei festgezogener Schraube 15 damit das Messer 4 an dem Messerrotor 1 festhält.

Wie bei der Gestaltung gemäß Figur 4 ist auch bei der Gestaltung gemäß Figur 5 die Schraube 15 mit einer Inbus-Ausnehmung versehen, in die ein passender Schlüssel einsetzbar ist, mit dem dann die Schraube 15 angezogen werden kann.

In der Figur 6 ist eine Abwandlung der Gestaltung gemäß Figur 5 dargestellt, bei der es sich darum handelt, dass das Messer 4 zweischneidig ausgebildet ist. Diese Gestaltung besitzt den Vorteil, dass das Messer 4, wenn eine seiner Schneiden 5 verschlissen ist, einfach umgedreht werden kann, womit eine neue Schneide in den Bereich des Messerrotors 1 gelangt, der dann den Granuliervorgang vornimmt.

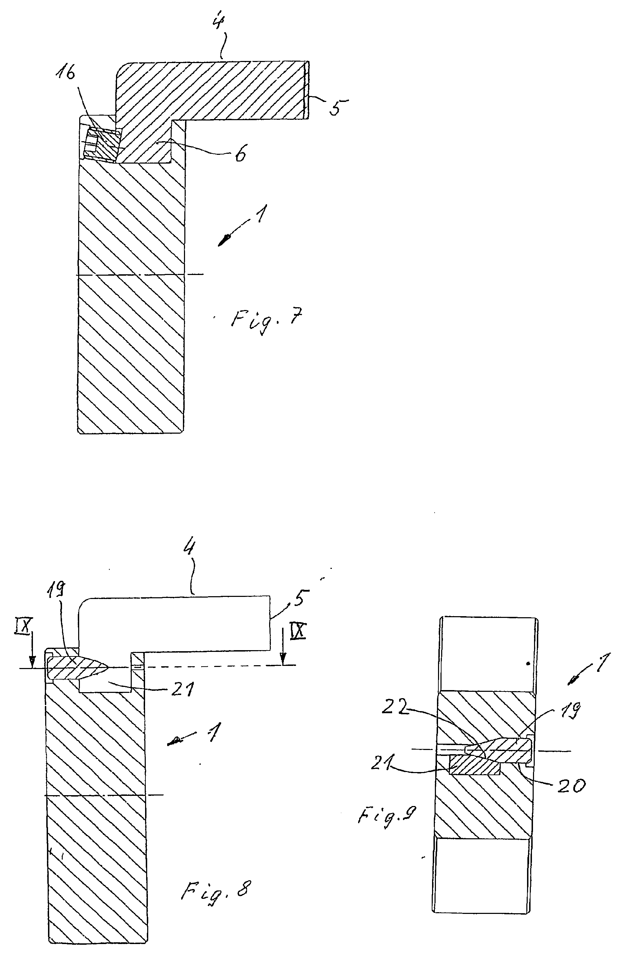

Figur 7 zeigt eine Gestaltung, die im Wesentlichen derjenigen gemäß Figur 4 entspricht, wobei lediglich die Schraube 16 von der der Messerschneide 5 abgewandten Seite gegen den Vorsprung 6 drückt und damit das Messer 4 an den Messerrotor 1 festhält.

Es sei noch darauf hingewiesen, dass bei den in den Figuren 4 bis 7 dargestellten Befestigungsmethoden jeweils die Schraube in einer Versenkung mit ihren ein Drehwerkzeug aufnehmenden Kopf verschwindet. Dies hat den Vorteil, dass bei einer gelegentlich notwendigen Reinigung des Messerrotors 1 von fest angeklebtem Granulatmaterial ein Abschaben dieses Materials nicht zu einer Beschädigung und damit Abreißen des Schraubenkopfes führt, was dann ein Herausdrehen der Schraube nachträglich unmöglich machen würde.

Bei den Ausführungsbeispielen gemäß den Figuren 1 bis 7 werden Schrauben als Befestigungselemente für die Messer verwendet. Wie eingangs bereits ausgeführt, sind aber auch andere Befestigungselemente möglich. In den Figuren 7 und 8 ist ein Ausführungsbeispiel dargestellt, bei dem als Befestigungselement ein Keilstück Verwendung findet. Dabei zeigt die Figur 8 einen radialen Schnitt durch den Messerrotor 1, in den zur Vereinfachung der Darstellung nur ein Messer eingesetzt ist, und die Figur 9 einen Schnitt längs der Linie IX-IX aus Figur 8.

Wie die Figuren 8 und 9 zeigen, dringt in den Messerrotor 1 das Keilstück 19 ein, wozu in den Messerrotor 1 ein entsprechender Durchbruch 20 vorgesehen ist, in den das Keilstück mit seinem hinteren zylindrischen Hals satt passt. Mit seinem vorderen keilförmigen Teil drückt das Keilstück 19 seitlich gegen den Vorsprung 21, der hier auf seiner dem Keilstück 19 zugewandten Seite mit einer entsprechenden Abschrägung 22 versehen ist. Das Keilstück 22 hält sich aufgrund seiner Reibung mit der Abschrägung 22 in seinem in den Figuren 8 und 9 darstellten Sitz fest. Es sei noch darauf hingewiesen, dass die Verwendung eines Keilstücks von beiden Seiten des Messerrotors 1 vorgesehen werden kann, wie dies im Zusammenhang mit Schrauben als Befestigungselemente in den oben beschriebenen Figuren bereits dargestellt ist.

## Patentansprüche

1. Messerrotor (1) zum Granulieren von Kunststoffsträngen, der mit axial von einer Stirnseite wegragenden Messern (4) versehen ist, die einzeln an Tragflächen des Messerrotors (1) mittels Befestigungselementen (12) angebracht sind, **dadurch gekennzeichnet, dass** der Messerrotor (1) mit in seine Umfangsfläche (2) mündenden Radialnuten (7) versehen ist, in die die Messer (4) mit hakenartig abgeknickten Vorsprüngen (6) so eingesetzt sind, dass ihre Messerschneiden (5) radial zur Achse des Messerrotors (1) verlaufen, und dass die Tragflächen von Seitenwänden (8, 9) der Radialnuten (7) und von die Radialnuten (7) begrenzenden Radialquerwänden (10, 11) gebildet sind, wobei die eine Radialquerwand (11) ein Widerlager (18) für das Befestigungselement (12) und die andere Radialquerwand (10) eine Anlage für den Vorsprung (6) bildet.

2. Messerrotor nach Anspruch 1, **dadurch gekennzeichnet, dass** die der Messerschneide (5) zugewandte Seite des Vorsprungs (6) derart schräg zur Radialrichtung verläuft, dass das auf den Vorsprung (6) drückende, als Schraube (12) ausgebildetes Befestigungselement mit einer den Vorsprung (6) in den Messerrotor (1) hineinziehenden Kraftkomponente beaufschlagt.

3. Messerrotor nach Anspruch 1, **dadurch gekennzeichnet, dass** der Vorsprung mit einer Einkerbung (14) versehen ist, in die eine entsprechend geformte Stirnseite des als Schraube ausgebildeten Befestigungselementes (15) drückt.

4. Messerrotor nach Anspruch 2 oder 3, **dadurch gekennzeichnet, dass** der eine Drehaufnahme aufweisende Kopf der Schrauben (12, 15, 16) in einer Ausnehmung in dem Messerrotor (1) versenkt ist.

5. Messerrotor nach Anspruch 1, **dadurch gekennzeichnet, dass** das Befestigungselement ein Keilstück zum Verklemmen des Vorsprungs (21) in der Radialnut ist.

6. Messerrotor nach einem der Ansprüche 1 bis 5, **dadurch gekennzeichnet, dass** die Befestigungselemente (12) in den Messerrotor (1) von der der Messerschneide (5) zugewandten Seite eindringen.

7. Messerrotor nach einem der Ansprüche 1 bis 5, **dadurch gekennzeichnet, dass** die Befestigungselemente (16) in den Messerrotor (1) von der der Messerschneide (5) abgewandten Seite eindringen.

## Claims

1. Cutter rotor (1) for the granulating plastic castings, said cutter rotor (1) being provided with knives (4) projecting axially away from its end surface, said knives (4) being individually affixed to supporting surfaces of the cutter rotor (1) by means of fastening elements (12), **characterized in that** the cutter rotor is provided with radial grooves (7) opening into its peripheral surface (2), into which grooves the knifes (4) are inserted by projections (6) kinked in hook-like manner such that its knife edge (5) extends radially with respect to the axis of the knife rotor (1), and that the supporting surfaces are formed by the side walls (8, 9) of radial grooves (7) and by radial transverse walls (10, 11) in the radial grooves (7) limiting the radial grooves (7), wherein the one radial transverse wall (11) forms an abutment (18) for the fastening element (12) and the other radial transverse walls (10) forms an abutment for the projection (6).

2. Cutter rotor according to claim 1, **characterized in that** the side of the projection (6) facing the knife edge (5) extends at such an angle to the radial direction that the fastening element, pressing on the projection (6) and being in the form of a screw (12), exerts a force component such as to pull the projection (6) into the cutter rotor (1).

3. Cutter rotor according to claim 1, **characterized in that** the projecting portion is provided with a notch (14), said notch (14) being engaged by a correspondingly shaped end surface of the fastening element (15), being in the form of a screw.

4. Cutter rotor according to claim 2 or 3, **characterized in that** the head of the screws (12, 15, 16) provided with a receptacle for a turning tool, is countersunk in a recess in the cutter rotor (1).

5. Cutter rotor according to claim 1, **characterized in that** the fastening element is a wedge piece for jamming the projection (21) in the radial groove.

6. Cutter rotor according to one of the claims 1 to 5, **characterized in that** the fastening elements (12) penetrate into the cutter rotor (1) from the side facing the knife edge (5).

7. Cutter rotor according to claim 1, **characterized in that** the fastening elements (16) penetrate into the cutter rotor (1) from the side facing away from the knife edge (5).

## Revendications

1. Rotor de mesure (1) pour le granulage de gaines de plastique pourvu d'une lame (4), qui s'étend de façon axiale à partir d'un côté frontal, fixée individuellement sur des surfaces porteuses du rotor de mesure (1) à l'aide d'éléments de fixation (12), **caractérisé en ce que** le rotor de mesure (1) est pourvu de rainures hélicoïdales (7) sur sa surface circonférentielle (2) dans lesquelles la lame (4) est insérée avec deux saillies recourbées en forme de crochet (6) de manière à ce que ses rebords (5) soient radiaux à l'axe du rotor de mesure (1) et que les surfaces porteuses des parois latérales (8, 9) des rainures hélicoïdales (7) et des parois transversales radiales limitrophes aux rainures hélicoïdales (10, 11) des rainures hélicoïdales (7), ladite paroi transversale radiale (11) formant une butée (18) pour l'élément de fixation (12) et les autres parois transversales radiales (10) formant un espace pour la saillie (6).

2. Rotor de mesure selon la revendication 1, **caractérisé en ce que** la paroi de la saillie (6) du côté opposé au rebord de la lame (5) s'étend en biais par rapport à la direction radiale de telle façon que l'élément de fixation qui appuie sur la saillie (6) et qui a une forme de vis (12) est alimenté d'une composante de force qui enfonce la saillie (6) dans le rotor de mesure (1).

3. Rotor de mesure selon la revendication 1, **caractérisé en ce que** la saillie est pourvue d'une encoche (14) dans laquelle un côté frontal d'une forme correspondante de l'élément de fixation formé en vis (15) vient s'enfoncer.

4. Rotor de mesure selon les revendications 2 ou 3, **caractérisé en ce que** ladite tête de vis pourvue d'un support rotatif (12, 15, 16) est enfoncée dans une exclusion du rotor de mesure (1).

5. Rotor de mesure selon la revendication 1, **caractérisé en ce que** l'élément de fixation est une pièce en forme de coin qui sert à serrer la saillie (21) dans la rainure hélicoïdale.

6. Rotor de mesure selon l'une des revendications 1 à 5, **caractérisé en ce que** les éléments de fixation (12) s'introduisent dans le rotor de mesure (1) à partir du côté opposé au rebord de la lame (5).

7. Rotor de mesure selon l'une des revendications 1 à 5, **caractérisé en ce que** les éléments de fixation (16) s'introduisent dans le rotor de mesure (1) à partir de la paroi qui est dos à la lame (5).
